# EUROPEAN PATENT SPECIFICATION

(11) **EP 2 416 091 B1**
(45) Date of publication and mention of the grant of the patent: **20.02.2019**
(21) Application number: 10758704.0
(22) Date of filing: 30.03.2010
(51) Int. Cl.: F25B 1/00, F04D 27/00, F25B 1/053, F04D 25/16, F04D 27/02, F25B 49/02

(54) **TURBO REFRIGERATION MACHINE AND METHOD FOR CONTROLLING THE SAME**
TURBOKÜHLMASCHINE UND VERFAHREN ZU IHRER STEUERUNG
TURBOMACHINE DE RÉFRIGÉRATION ET PROCÉDÉ POUR SA COMMANDE

(30) Priority: 31.03.2009 JP 2009087515
(43) Date of publication of application: 08.02.2012
(73) Proprietor: MITSUBISHI HEAVY INDUSTRIES THERMAL SYSTEMS, LTD., Tokyo 108-8215 (JP)
(72) Inventor: UEDA, Kenji, Kiyosu-shi Aichi 452-8561 (JP)
(74) Representative: Henkel, Breuer & Partner
(86) International application number: PCT/JP2010/055663
(87) International publication number: WO 2010/113933

(56) References cited:
- WO-A1-99/05463
- JP-A- 5 196 312
- JP-A- 63 073 057
- JP-A- 2003 307 197
- JP-A- 2008 070 067
- JP-T- 2001 511 509
- JP-T- 2005 534 858
- JP-U- 48 080 136
- US-A- 4 646 530
- US-A1- 2003 230 098

## Description

### {Technical Field}

The present invention relates to a centrifugal-chiller equipped with a variable-speed centrifugal-compressor and a constant-speed centrifugal-compressor and to a method for controlling the same.

### {Background Art}

Known heat source systems for use in supplying chilled water in semiconductor factories and zoned air conditioning are equipped with centrifugal-chillers. The centrifugal-chillers are equipped with centrifugal-compressors for compressing refrigerant. In general, one centrifugal-compressor is provided for one centrifugal-chiller. However, in the case where manufacturing costs can be reduced by using available general-purpose centrifugal-compressors or to cope with high capacity where sufficient performance cannot be achieved by one centrifugal-compressor, two centrifugal-compressors are sometimes provided for one centrifugal-chiller. In this case, however, centrifugal-compressors having the same capacity are generally disposed in parallel in consideration of ease of maintenance or operation.

On the other hand, for package air conditioners based on a principle different from that of the centrifugal-chillers, a known approach is to dispose two compressors in parallel. These compressors are a combination of a variable-speed compressor whose rotational frequency can be varied using an inverter and a constant-speed compressor operated at a constant rotational speed.

JP 7-35425 A and JP H7-83523 A disclose a refrigerator including a variable-speed compressor and a constant-speed compressor connected in parallel with the variable-speed compressor.

US 2003/230098 A1 discloses an air conditioning apparatus and a control method thereof which has a first compressor to operate at a capacity varied according to a frequency of an inverter circuit, a fixed-capacity compressor to operate at a constant capacity which are connected in parallel with each other, a condenser that is arranged to condense the refrigerant compressed by the variable-speed compressor and/ or the constant-speed compressor into a liquid using cooling water supplied thereto; an expansion valve that is arranged to expand the refrigerant that is condensed into a liquid by the condenser; and an evaporator that is arranged to evaporate the refrigerant expanded by the expansion valve. An outdoor unit micro computer, being a control unit, is configured to control the operation and the capacities of the compressors according to indoor conditioning loads received from respective indoor units and, if the indoor air conditioning loads are 0 to 50%, the outdoor unit micro computer controls the capacity of the compressor by varying the frequency outputted to the compressor from the inverter circuit within a predetermined range according to the indoor air conditioning load received from the respective indoor units. If the indoor air conditioning loads are 50 to 100%, the outdoor unit micro computer controls the capacities of the compressors together and in this case the micro computer copes with an insufficient capacity by controlling the capacity of the inverter-type compressor within a predetermined range after activating the fixed-capacity compressor.

### {Summary of Invention}

### {Technical Problem}

However, the compressors described in the foregoing Patent Literatures assume a scroll compressor or a rotary compressor and fundamentally differ in the principle of operation from a centrifugal-compressor, which is an aerodynamic rotary machine. Thus, an approach completely different from the scroll compressor and the rotary compressor is required in consideration of enhancing the efficiency of centrifugal-chillers. For example, a centrifugal-chiller that uses a variable-speed centrifugal-compressor whose rotational frequency can be varied using an inverter shows a high COP (coefficient of performance of the centrifugal-chiller) in regions at a low cooling-water temperature (outside-air wet-bulb temperature) and shows an extremely high COP in regions at a low cooling-water temperature and a low compressor load factor. Furthermore, it has the characteristic that the COP is decreased by an amount corresponding to an inverter loss at a high cooling-water temperature and a high compressor load factor as compared with the constant-speed compressor operated at a constant rotational speed. On the other hand, a centrifugal-chiller that uses a constant-speed centrifugal-compressor shows a low COP at a low compressor load factor and shows a high COP at a high compressor load factor. Thus, with the use of two compressors, that is, one variable-speed centrifugal-compressor and one constant-speed centrifugal-compressor, for one centrifugal-chiller energy-saving combinations and operation control methods can be expected.

Furthermore, in the case where the capacity of the centrifugal-chiller is so large that two centrifugal-compressors are needed, two constant-speed centrifugal-compressors may be provided; however, enhancement of the efficiency cannot be expected at a low compressor load factor. On the other hand, two variable-speed centrifugal-compressors may be provided, in which case two inverters are needed, thus posing problems in terms of cost and maintenance. Thus, a combination of one variable-speed centrifugal-compressor and one constant-speed centrifugal-compressor may be provided. At present, however, there are no proposals to optimally enhance the efficiency of such a combination of centrifugal-compressors.

The present invention is made in consideration of such circumstances and provides a centrifugal-chiller equipped with one variable-speed centrifugal-compressor and one constant-speed centrifugal-compressor to allow a high efficiency operation, as well as a method for controlling the same.

### {Solution to Problem}

To solve the above problems, a centrifugal-chiller and a method for controlling the same of the present invention adopt the solutions with the features of claim 1 and claim 4, respectively.

A centrifugal-chiller according to the present invention includes a variable-speed centrifugal-compressor whose rotational frequency can be varied by an inverter and which compresses a refrigerant; a constant-speed centrifugal-compressor connected in parallel with the variable-speed centrifugal-compressor and operated at a constant rotational speed to compress the refrigerant; a condenser that condenses the refrigerant compressed by the variable-speed centrifugal-compressor and/or the constant-speed centrifugal-compressor into a liquid using cooling water supplied thereto; an expansion valve that expands the refrigerant that is condensed into a liquid by the condenser; an evaporator that evaporates the refrigerant expanded by the expansion valve; and a control unit that controls the operations of the variable-speed centrifugal-compressor and the constant-speed centrifugal-compressor, wherein in the case where a required load factor of the centrifugal-chiller is less than a predetermined value, the control unit selects a variable-speed-compressor priority operating mode in which only the variable-speed centrifugal-compressor is activated, and in the case where the required load factor of the centrifugal-chiller is the predetermined value or greater, the control unit selects a combined-use operating mode in which the variable-speed centrifugal-compressor and the constant-speed centrifugal-compressor are activated.

A centrifugal-chiller that uses a variable-speed centrifugal-compressor whose rotational frequency can be varied by an inverter has the characteristic of showing a relatively high COP (coefficient of performance of the centrifugal-chiller) at a low compressor load factor, and showing a decreased COP at a high compressor load factor. This tendency is notable at a low cooling water temperature as in the winter season.

On the other hand, a centrifugal-chiller that uses a constant-speed centrifugal-compressor operated at a constant rotational speed shows a low COP at a low compressor load factor and shows a high COP at a high compressor load factor. This tendency is notable at a high cooling water temperature as in the summer season.

In the centrifugal-chiller according to the present invention, in the case where the load factor of the centrifugal-chiller is less than a predetermined value, the variable-speed-compressor priority operating mode in which only the variable-speed centrifugal-compressor whose compressor load factor is less than the predetermined value is selected, and in the case where the load factor of the centrifugal-chiller is the predetermined value or greater, the combined-use operating mode in which both the variable-speed and the constant-speed centrifugal-compressors are activated is selected because the compressor load factors of the individual compressors are the predetermined value or greater in consideration of the characteristics. In the case of operation of only one compressor, the centrifugal-chiller load factor corresponds to the load factor of the compressor, and in the case of operation of two compressors, it corresponds to the sum of the load factors of the compressors.

In general, in a state in which the cooling water temperature is relatively low as in the winter season or in the intermediate seasons, the centrifugal-chiller load factor frequently becomes low and the compressor load factor becomes less than a predetermined value, in which case, a high-efficiency operation is achieved only by the variable-speed centrifugal-compressor by selecting the variable-speed-compressor priority operating mode. On the other hand, since the centrifugal-chiller load factor rises, so that the compressor load factor becomes the predetermined value or greater in the summer season during which the cooling water temperature is relatively high, a high-efficiency operation can be achieved by shifting to the combined-use operating mode. Thus, a centrifugal-chiller that shows a high COP across wide compressor load factors can be achieved by combining the variable-speed-compressor priority operating mode and the combined-use operating mode.

In the centrifugal-chiller according to the present invention described above, the predetermined value of the load factor of the centrifugal-chiller may be set to 30% or greater and less than 50%.

The predetermined value of the load factor of the centrifugal-chiller, that is, a threshold for switching between the variable-speed-compressor priority operating mode and the combined-use operating mode, is set to 30% or greater and less than 50%. This allows the variable-speed centrifugal-compressor to be operated mainly in the variable-speed-compressor priority operating mode in which the load factor of the centrifugal-chiller is set low, thus allowing the variable-speed centrifugal-compressor having a relatively low capacity to be selected. That is, it suffices that the variable-speed centrifugal-compressor have a capacity corresponding to a centrifugal-chiller load factor of 30% or higher and less than 50%. Accordingly, it suffices to employ a variable-speed centrifugal-compressor having a capacity of about half or less than that of the constant-speed centrifugal-compressor, which allows a general-purpose inverter to be used, thus allowing the centrifugal-compressor to be configured at low cost.

The predetermined value of the compressor load factor, which serves as a threshold, is preferably set to the lower limit of a region in which the efficiency of the constant-speed centrifugal-compressor is a predetermined value or greater (for example, within 20% of the highest efficiency). This can prevent the constant-speed centrifugal-compressor from being activated at a low compressor load factor which would decrease the efficiency of the centrifugal-chiller.

The capacity of the constant-speed centrifugal-compressor is selected so that the sum of it and the capacity of the variable-speed centrifugal-compressor satisfies the centrifugal-chiller load factor of 100%. For example, in the case where the variable-speed centrifugal-compressor has a capacity corresponding to centrifugal-centrifugal-chiller load factor of 30%, the constant-speed centrifugal-compressor is set to a capacity corresponding to a centrifugal-centrifugal-chiller load factor of 70%.

In the centrifugal-chiller according to the present invention described above, an inlet guide vane that controls the flow rate of the refrigerant flowing to an impeller of the constant-speed centrifugal-compressor may be provided upstream of the impeller in the flow of the refrigerant; and a wall facing the inlet guide vane may have a sealing portion that minimizes leakage of the refrigerant through the gap between the inlet guide vane and the wall when the inlet guide vane is fully closed.

The constant-speed centrifugal-compressor is not activated when the variable-speed-compressor priority operating mode is selected. Since the constant-speed centrifugal-compressor is connected in parallel with the variable-speed centrifugal-compressor, a pressure difference in refrigerant is generated in front of and behind the constant-speed centrifugal-compressor even in the variable-speed-compressor priority operating mode. When the refrigerant leaks from the high pressure side to the low pressure side due to the pressure difference, a refrigerant flow that does not contribute to refrigeration is generated, and thus, the performance of the chiller deteriorates.

Thus, the centrifugal-chiller according to the present invention has a sealing section that minimizes refrigerant leakage between the inlet guide vane and the wall, thereby minimizing refrigerant leakage when the inlet guide vane is fully closed. Thus, even in the variable-speed-compressor priority operating mode, the amount of refrigerant leaked via the constant-speed centrifugal-compressor is minimized, so that deterioration in the performance of the chiller can be prevented. Furthermore, since the refrigerant leakage in the constant-speed centrifugal-compressor is minimized, there is no need to provide additional automatic on/off valve in the refrigerant piping.

An example of the sealing section is a labyrinth seal formed at the wall side.

A method for controlling a centrifugal-chiller according to present invention is a method for controlling a centrifugal-chiller including a variable-speed centrifugal-compressor whose rotational frequency can be varied by an inverter and which compresses a refrigerant; a constant-speed centrifugal-compressor connected in parallel with the variable-speed centrifugal-compressor and operated at a constant rotational speed to compress the refrigerant; a condenser that condenses the refrigerant compressed by the variable-speed centrifugal-compressor and/or the constant-speed centrifugal-compressor into a liquid using cooling water supplied thereto; an expansion valve that expands the refrigerant that is condensed into a liquid by the condenser; and an evaporator that evaporates the refrigerant expanded by the expansion valve, the method controlling the operations of the variable-speed centrifugal-compressor and the constant-speed centrifugal-compressor, wherein in the case where a required load factor of the centrifugal-chiller is less than a predetermined value, the control unit selects a variable-speed-compressor priority operating mode in which only the variable-speed centrifugal-compressor is activated, and in the case where the required load factor of the centrifugal-chiller is the predetermined value or greater, the control unit selects a combined-use operating mode in which the variable-speed centrifugal-compressor and the constant-speed centrifugal-compressor are activated.

A centrifugal-chiller that uses a variable-speed centrifugal-compressor whose rotational frequency can be varied by an inverter has the characteristic of showing a relatively high COP (coefficient of performance of the centrifugal-chiller) at a low compressor load factor, and showing a decreased COP at a high compressor load factor. This tendency is notable at a low cooling water temperature as in the winter season.

On the other hand, a centrifugal-chiller that uses a constant-speed centrifugal-compressor operated at a constant rotational speed shows a low COP at a low compressor load factor and shows a high COP at a high compressor load factor. This tendency is notable at a high cooling water temperature as in the summer season.

In the method for controlling the centrifugal-chiller according to the present invention, in the case where the load factor of the centrifugal-chiller is less than a predetermined value, the variable-speed-compressor priority operating mode in which only the variable-speed centrifugal-compressor whose compressor load factor is less than the predetermined value is selected, and in the case where the load factor of the centrifugal-chiller is the predetermined value or greater, the combined-use operating mode in which both the variable-speed and the constant-speed centrifugal-compressors are activated is selected because the compressor load factors of the individual compressors are the predetermined value or more in consideration of the characteristics. The centrifugal-chiller load factor corresponds to a compressor load factor in the case of operation of only one compressor and corresponds to the sum of compressor load factors in the case of the operation of two compressors.

In general, in a state in which the cooling water temperature is relatively low as in the winter season or in the intermediate seasons, the centrifugal-chiller load factor frequently becomes low and the compressor load factor becomes less than a predetermined value, in which case, a high-efficiency operation is achieved only by the variable-speed centrifugal-compressor by selecting the variable-speed-compressor priority operating mode. On the other hand, since the centrifugal-chiller load factor rises, so that the compressor load factor becomes the predetermined value or greater in the summer season during which the cooling water temperature is relatively high, a high-efficiency operation can be achieved by shifting to the combined-use operating mode. Thus, a centrifugal-chiller that shows a high COP across wide compressor load factors can be achieved by combining the variable-speed-compressor priority operating mode and the combined-use operating mode.

### {Advantageous Effects of Invention}

The centrifugal-chiller and the method for controlling the same according to the present invention provide the following operational advantages.

In the case where the load factor of the centrifugal-chiller is less than a predetermined value, a variable-speed-compressor priority operating mode in which only the variable-speed centrifugal-compressor is activated is selected, and in the case where the load factor of the centrifugal-chiller is the predetermined value or greater, a combined-use operating mode in which the variable-speed centrifugal-compressor and the constant-speed centrifugal-compressor are activated is selected, and thus, a centrifugal-chiller that shows a high COP across wide compressor load factors can be achieved.

When the cooling water temperature is low as in the winter season during which the cooling water temperature is a predetermined value or less, the variable-speed-compressor priority operating mode is selected, and thus, higher efficiency is achieved.

When the cooling water temperature is high as in the summer season during which the cooling water temperature is a predetermined value or greater, the combined-use operating mode is selected, and thus, higher efficiency is achieved.

For the intermediate seasons during which the cooling water temperature is not high as in the summer season and not low as in the winter season, the variable-speed-compressor priority operating mode is selected in the case where the load factor of the centrifugal-chiller is less than a predetermined value, and the combined-use operating mode is selected in the case where the load factor of the centrifugal-chiller is the predetermined value or greater, and a further increased efficiency is achieved.

A sealing section that minimizes refrigerant leakage is provided between the inlet guide vane and the wall, thereby minimizing refrigerant leakage when the inlet guide vane is fully closed. Thus, even in the variable-speed-compressor priority operating mode, the amount of refrigerant leaked via the constant-speed centrifugal-compressor is minimized, so that deterioration in the performance of the chiller can be prevented.

### {Brief Description of Drawings}

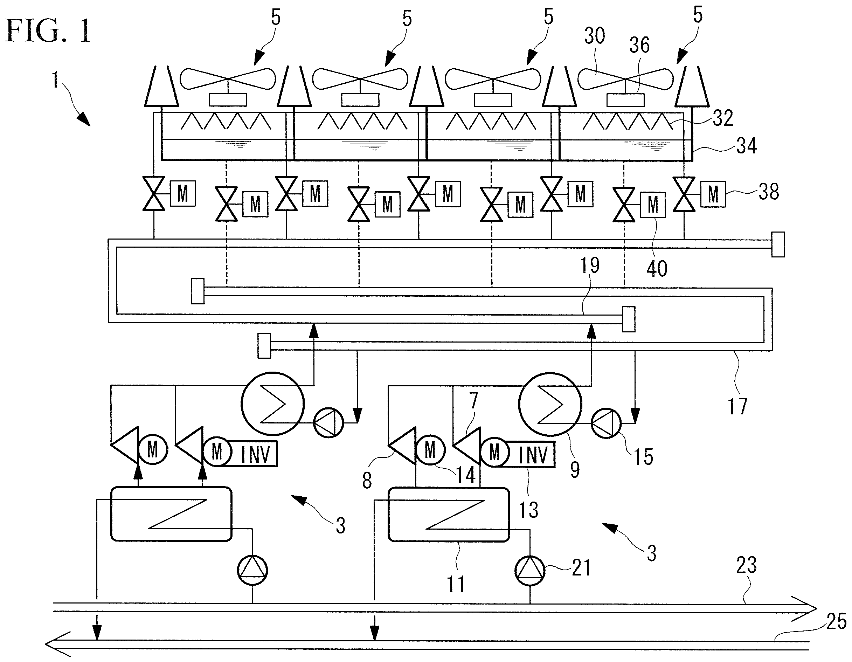

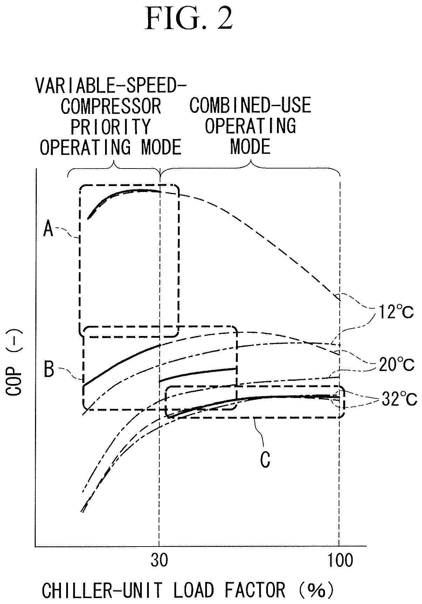

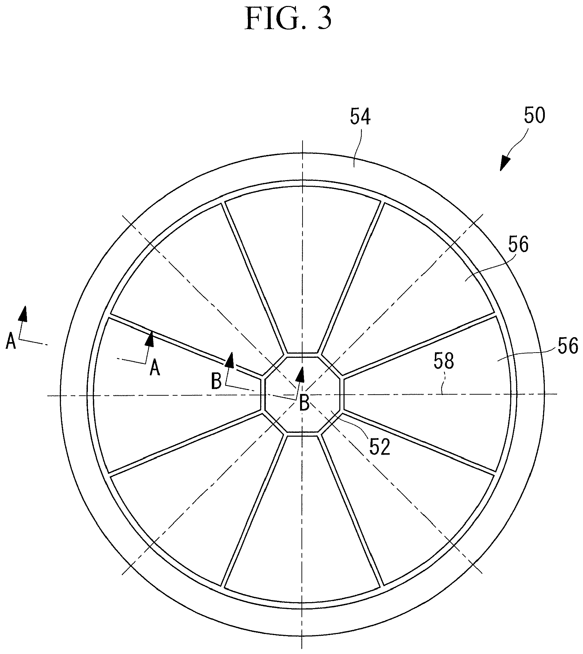

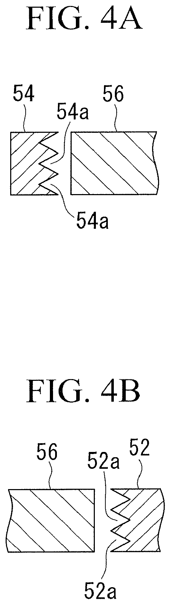

{Fig. 1} Fig. 1 is a schematic configuration diagram showing a heat source system equipped with centrifugal-chillers according to an embodiment of the present invention.
{Fig. 2} Fig. 2 is a graph showing the COP of the centrifugal-chiller versus the load factor of the chiller unit (centrifugal-chiller).
{Fig. 3} Fig. 3 is a front view of an inlet guide vane in a fully closed state.
{Fig. 4A} Fig. 4A is a cross-sectional view taken along section line A-A in Fig. 3.
{Fig. 4B} Fig. 4B is a cross-sectional view taken along section line B-B in Fig. 3.

### {Description of Embodiments}

An embodiment of the present invention will be described hereinbelow with reference to the drawings.

Fig. 1 shows an embodiment of a heat source system equipped with centrifugal-chillers according to the present invention. A heat source system 1 is equipped with a plurality of (two in this embodiment) centrifugal-chillers 3 provided in parallel and a plurality of (four in this embodiment) cooling towers 5 provided in parallel.

The centrifugal-chillers 3 are each equipped with two centrifugal-compressors 7 and 8 that compress a refrigerant, a condenser 9 that condenses the refrigerant compressed by the centrifugal-compressors 7 and 8 to liquefy it, an expansion valve (not shown) that expands the refrigerant condensed and liquefied by the condenser 9, and an evaporator 11 that evaporates the refrigerant expanded by the expansion valve.

One centrifugal-compressor 7 of the two is driven by an electric motor 13 whose rotational frequency can be varied by an inverter. Thus, the centrifugal-compressor 7 is a variable-speed centrifugal-compressor.

The other centrifugal-compressor 8 is a constant-speed centrifugal-compressor that is operated at a fixed rotational speed by an electric motor 14.

Cooling water supplied by a cooling-water pump 15 is guided to the condenser 9. The cooling-water pump 15 is driven by an electric motor (not shown) whose rotational frequency can be varied by an inverter. The inlet temperature of the cooling water supplied to the condenser 9 and the output temperature of the cooling water flowing out from the condenser 9 are measured by temperature sensors (not shown), and the output values are transmitted to a control unit, to be described later.

The individual cooling-water pumps 15 suck cooling water guided from a cooling-water return header 17 and discharge it toward the condenser 9. The cooling water discharged from the condenser 9 side is guided to a cooling-water supply header 19. All of the centrifugal-chillers 3 and all of the cooling towers 5 are connected in common to the cooling-water return header 17. All of the centrifugal-chillers 3 and all of the cooling towers 5 are connected in common also to the cooling-water supply header 19.

Cooling water supplied by a chilled water pump 21 is guided to the evaporator 11. The chilled-water pump 21 is driven by an electric motor (not shown) whose rotational frequency can be varied by an inverter. The inlet temperature of the chilled water supplied to the evaporator 11 and the output temperature of the chilled water flowing out from the evaporator 11 are measured by temperature sensors (not shown), and the output values are transmitted to the control unit, to be described later. The flow rate of the chilled water is also measured by a flowmeter, and the output value is transmitted to the control unit, to be described later. The control unit calculates a load consumed by an external load by multiplying the difference between the chilled-water inlet and outlet temperatures, the cooling-water flow rate, the specific heat of the chilled water, and the specific gravity of the chilled water together.

The individual chilled water pumps 21 suck chilled water guided from a chilled-water return header 23 and discharge it toward the evaporator 11. The chilled water discharged from the evaporator 11 side is guided to a chilled-water supply header 25. All of the centrifugal-chillers 3 are connected in common to the chilled-water return header 23. All of the centrifugal-chillers 3 are connected in common also to the chilled-water supply header 25.

The chilled-water return header 23 and the chilled-water supply header 25 are connected to the external load (not shown). The external load is supplied with chilled water (for example, at 7 °C) cooled by the evaporator 11 through the chilled-water supply header 25, and the chilled water that is used by the external load and has its temperature increased (for example, to 12 °C) is returned to the evaporator 11 side through the chilled-water return header 23.

The cooling towers 5 are each provided with a cooling tower fan 30, a water spray header 32, and a cooling-water reservoir tank 34.

The cooling tower fan 30 is used to introduce outside air into the cooling tower 5 and is driven by an electric motor 36. The electric motor 36 preferably has a rotational frequency that can be varied by an inverter.

The water spray header 32 sprays cooling water into outside air from above to bring it into contact with the outside air, thereby cooling the cooling air using not only sensible heat but also latent heat of vaporization. A cooling-water supply on/off valve 38 is provided between the water spray header 32 and the cooling-water supply header 19.

The cooling-water reservoir tank 34 reserves the cooled cooling water sprayed and cooled by the outside air. The cooling water reserved in the cooling-water reservoir tank 34 is guided to the cooling-water return header 17 via a cooling-water return on/off valve 40.

The cooling towers 5 are each activated and stopped by opening and closing the cooling-water supply on/off valve 38 and the cooling-water return on/off valve 40. Thus, the number of cooling towers 5 to be activated can be changed.

The cooling towers 5 are each provided with a humidity sensor (not shown). The humidity sensor measures an outside-air wet-bulb temperature. The output of the humidity sensor is sent to the control unit, to be described later. The outside-air wet-bulb temperature may be determined from a dry-bulb temperature, a relative humidity, and an outside air pressure, instead of using the humidity sensor.

The heat source system 1 is equipped with the control unit (not shown), and the control unit controls the operations of the centrifugal-compressors 7 and 8, the expansion valves, the cooling-water pumps 15, the cooling tower fans 30, the cooling-water supply on/off valves 38, the cooling-water return on/off valves 40, and the chilled water pumps 21.

The above-configured heat source system 1 operates as follows.

The centrifugal-compressors 7 and 8 are activated in accordance with an instruction from the control unit to compress the refrigerant. The order of activation of the centrifugal-compressors 7 and 8 will be described later.

The refrigerant compressed by the centrifugal-compressors 7 and 8 is guided to the condenser 9 and cooled by cooling water supplied from the cooling-water return header 17 by the cooling-water pump 15 to be condensed to a liquid. The cooling water that has been given latent heat of condensation by the condenser 9 to raise its temperature is guided to the cooling-water supply header 19 and is guided to the water spray header 32 via the cooling-water supply on/off valve 38. The cooling water is sprayed into the outside air from the water spray header 32 and is cooled by coming into contact with the outside air guided by the cooling tower fan 30. The cooled cooling water is temporarily reserved in the cooling-water reservoir tank 34 and is then guided to the cooling-water return header 17 via the cooling-water return on/off valve 40. Thus, the cooling water circulates between the condenser 9 and the cooling tower 5.

The liquid refrigerant condensed into a liquid by the condenser 9 is expanded by the expansion valve (not shown) and is then guided to the evaporator 11. The evaporator 11 evaporates the liquid refrigerant to absorb latent heat of vaporization from the chilled water to cool the chilled water. The chilled water is guided from the chilled-water return header 23 to the evaporator 11 by the chilled water pump 21, is cooled to a desired temperature (for example, 7 °C) by the evaporator 11, and is guided to the chilled-water supply header 25. The chilled-water supply header 25 is connected to the external load (not shown), where the chilled water is used by the external load and has its temperature increased to a predetermined temperature (for example, 12 °C) and is then returned to the chilled-water return header 23.

The refrigerant evaporated by the evaporator 11 is guided to the intake ports of the centrifugal-compressors 7 and 8, where it is compressed again.

Next, a method for activating the centrifugal-compressors 7 and 8 will be described using Fig. 2. The horizontal axis in the drawing indicates the load factor of the centrifugal-chiller, and the vertical axis indicates the COP of the centrifugal-chiller 3. The load factor of the centrifugal-chiller is the quotient of the output of the centrifugal-chiller 3 (the sum of the outputs of the centrifugal-compressors 7 and 8 in operation), which is required to continue an operation necessary to maintain a required chilled-water outlet temperature, divided by the sum of the rated outputs of the centrifugal-chiller 3 (the sum of the rated outputs of the centrifugal-compressors 7 and 8). The control unit tracks the present operating states of the heat source system 1 and the centrifugal-chiller 3 and constantly obtains the load factor of the centrifugal-chiller.

In the drawing, broken lines indicate the variable-speed centrifugal-compressor 7, and two-dot chain lines indicate the constant-speed centrifugal-compressor 8. The curved lines indicate COPs at cooling-water inlet temperatures (the temperatures of cooling water flowing into the condenser 9), specifically, 12 °C, 20 °C, and 32 °C. The cooling-water inlet temperature, 12 °C, represents the winter season, 20 °C represents daytime in intermediate seasons and night in the summer season (hereinafter simply referred to as "intermediate seasons"), and 32 °C represents daytime in the summer season (hereinafter simply referred to as "summer season").

As shown in the drawing, the centrifugal-chiller that uses the centrifugal-compressor 7 has the characteristic of showing a relatively high COP at a low centrifugal-chiller load factor and showing a decreased COP at a high centrifugal-chiller load factor, at a low cooling water temperature (for example, 12 °C), as in the winter season. On the other hand, the centrifugal-chiller that uses the constant-speed centrifugal-compressor 8 shows a significantly decreased COP at a low centrifugal-chiller load factor and a constant high COP at a high centrifugal-chiller load factor, at a high cooling water temperature (for example, 30 °C).

This embodiment performs operation control as follows on the basis of the characteristics of the centrifugal-compressors described above.

In the case where the load factor of the centrifugal-chiller is less than a predetermined value (for example, 30%), only the variable-speed centrifugal-compressor 7 is activated (variable-speed-compressor priority operating mode), and in the case where the load factor of the centrifugal-chiller is the predetermined value or greater, both the centrifugal-compressors 7 and 8 are activated to the rating (combined-use operating mode). The threshold load factor of the centrifugal-chiller is not limited to 30% and is suitably set depending on the characteristics of the centrifugal-chiller. However, it is preferable to set the threshold value between 30% or more and less than 50%.

In the case where the load factor of the centrifugal-chiller, which serves as the threshold for switching between the operations of the centrifugal-compressors, is set to 30%, a capacity of about 30% of the rated output is selected for the variable-speed centrifugal-compressor 7, and a capacity of about 70% of the rating is selected for the constant-speed centrifugal-compressor 8.

In the region where the centrifugal-chiller load factor is 30% or less, COPs of the variable-speed centrifugal-compressor 7 higher than the COPs of the constant-speed centrifugal-compressor 8 are selected, as indicated by the bold solid lines in the drawing. In general, a centrifugal-chiller load factor of less than 30% is for operation in the winter season (region A) and the intermediate seasons (region B). Accordingly, a centrifugal-chiller load factor of less than 30% allows high-efficiency operation to be achieved by selecting the variable-speed centrifugal-compressor 7.

In the region where the centrifugal-chiller load factor is 30% or higher and 100% or less, the intermediate values of the COPs of the constant-speed centrifugal-compressor 8 and the variable-speed centrifugal-compressor 7 are selected as indicated by the bold solid lines in the drawing. The region where the centrifugal-chiller load factor is 30% or more and 100% or less is for operation in the intermediate seasons (region B) and the summer season (region C). Since the COP of the constant-speed centrifugal-compressor 8 is sufficiently improved at cooling-water inlet temperatures in the intermediate seasons and the summer season when the load factor of the centrifugal-chiller exceeds 30%, high-efficiency operation can be achieved even by combined-use operation of the centrifugal-compressors 7 and 8.

Thus, this embodiment can achieve the centrifugal-chiller 3 that shows high COPs across wide load factors of the centrifugal-chiller by combining the variable-speed-compressor priority operating mode and the combined-use operating mode.

Furthermore, the load factor of the centrifugal-chiller, which serves as a threshold for switching between the variable-speed-compressor priority operating mode and the combined-use operating mode, is set to 30% or higher and less than 50%. This allows the variable-speed centrifugal-compressor 7 to be operated mainly in the variable-speed-compressor priority operating mode in which the load factor of the centrifugal-chiller is set low, thus allowing the variable-speed centrifugal-compressor 7 having a relatively low capacity to be selected. That is, it suffices that the variable-speed centrifugal-compressor 7 have a capacity corresponding to a centrifugal-chiller load factor of 30% or more and less than 50%. Accordingly, it suffices to employ a variable-speed centrifugal-compressor having a capacity of about half or less compared with that of the constant-speed centrifugal-compressor 8, which allows a general-purpose inverter to be used, thus allowing the centrifugal-compressor to be configured at low cost.

Next, the configuration of an inlet guide vane provided in the constant-speed centrifugal-compressor 8 will be described using Fig. 3 and Figs. 4A and 4B.

An inlet guide vane 50 is provided upstream of an impeller (not shown) of the constant-speed centrifugal-compressor 8 and controls the flow rate of the refrigerant flowing to the impeller. The inlet guide vane 50 is provided between a central shaft 52 and a peripheral ring 54, in which a plurality of vanes 56 are disposed in a radiating pattern. The vanes 56 are plate-like members each having a substantially sector shape. The individual vanes 56 rotate about a rotation axis 58 passing through the center of the central shaft 52. The state in Fig. 3 shows a closed state, in which the individual vanes 56 are located so that the surfaces intersect the channel of the refrigerant. In an open state, the individual vanes 56 rotate at 90° to positions at which the surfaces thereof are located along the flow of the refrigerant.

Fig. 4A shows a cross section taken along section line A-A in Fig. 3. As shown in the drawing, a plurality of grooves 54a are formed in the refrigerant flowing direction (vertically in the drawing) in the inner peripheral surface of the peripheral ring 54 to form a labyrinth seal (sealing portion). Furthermore, as shown in Fig. 4B showing a cross section taken along section line B-B in Fig. 3, the outer peripheral surface of the central shaft 52 also has a plurality of grooves 52a to form a labyrinth seal (sealing portion).

The labyrinth seals are provided between the individual vanes 56 and the peripheral ring 54 and the central shaft 52 in this manner to minimize refrigerant leakage in the fully closed state. Thus, even in the case where a pressure difference in refrigerant is generated in front and behind the constant-speed centrifugal-compressor 8 due to the variable-speed centrifugal-compressor 7 disposed in parallel even though the constant-speed centrifugal-compressor 8 is not activated, as in the variable-speed-compressor priority operating mode, the inlet guide vane 50 is fully closed to minimize refrigerant leakage. Thus, even in the variable-speed-compressor priority operating mode, the amount of refrigerant leaked via the constant-speed centrifugal-compressor 8 is minimized, so that deterioration in the performance of the chiller can be prevented. Furthermore, since the refrigerant leakage in the constant-speed centrifugal-compressor 8 is minimized, there is no need to provide an additional on/off valve in refrigerant piping.

### {Reference Signs List}

- 1: heat source system
- 3: centrifugal-chiller
- 5: cooling tower
- 7: centrifugal-compressor
- 9: condenser
- 11: evaporator
- 13: electric motor
- 15: cooling-water pump
- 17: cooling-water return header
- 19: cooling-water supply header
- 21: chilled water pump
- 23: chilled-water return header
- 25: chilled-water supply header
- 30: cooling tower fan
- 32: water spray header
- 34: cooling-water reservoir tank
- 36: electric motor
- 38: cooling-water supply on/off valve
- 40: cooling-water return on/off valve

## Claims

1. A centrifugal-chiller (3) comprising:
a variable-speed centrifugal-compressor (7) configured such that its rotational frequency can be varied by an inverter and which is arranged to compress a refrigerant;
a constant-speed centrifugal-compressor (8) connected in parallel with the variable-speed centrifugal-compressor (7) and arranged to be operated at a constant rotational speed to compress the refrigerant;
a condenser (9) that is arranged to condense the refrigerant compressed by the variable-speed centrifugal-compressor (7) and/or the constant-speed centrifugal-compressor (8) into a liquid using cooling water supplied thereto;
an expansion valve that is arranged to expand the refrigerant that is condensed into a liquid by the condenser (9) ;
an evaporator (11) that is arranged to evaporate the refrigerant expanded by the expansion valve; and
a control unit that is configured to control the operations of the variable-speed centrifugal-compressor (7) and the constant-speed centrifugal-compressor (8),
wherein, in the case where a required load factor of the centrifugal-chiller (3) is less than a predetermined value, the control unit selects a variable-speed-compressor priority operating mode in which only the variable-speed centrifugal-compressor (7), whose coefficient of performance (COP) in the region where the load factor is less than the predetermined value is higher than the coefficient of performance (COP) of the constant-speed centrifugal-compressor (8), is activated, and in the case where the required load factor of the centrifugal-chiller (3) is the predetermined value or greater, the control unit selects a combined-use operating mode in which the variable-speed centrifugal-compressor (7) and the constant-speed centrifugal-compressor (8) are activated.

2. The centrifugal-chiller (3) according to Claim 1, wherein the predetermined value of the load factor of the centrifugal-chiller is set to 30% or higher and less than 50%.

3. The centrifugal-chiller (3) according to Claim 1 or 2, wherein
an inlet guide vane (50) that is arranged to control the flow rate of the refrigerant flowing to an impeller of the constant-speed centrifugal-compressor (8) is provided upstream of the impeller in the flow of the refrigerant; and
a wall facing the inlet guide vane (50) has a sealing portion that minimizes leakage of the refrigerant through the gap between the inlet guide vane (50) and the wall when the inlet guide vane (50) is fully closed.

4. A method for controlling a centrifugal-chiller (3) including
a variable-speed centrifugal-compressor (7) whose rotational frequency can be varied by an inverter and which compresses a refrigerant;
a constant-speed centrifugal-compressor (8) connected in parallel with the variable-speed centrifugal-compressor (7) and operated at a constant rotational speed to compress the refrigerant;
a condenser (9) that condenses the refrigerant compressed by the variable-speed centrifugal-compressor (7) and/or the constant-speed centrifugal-compressor (8) into a liquid using cooling water supplied thereto;
an expansion valve that expands the refrigerant that is condensed into a liquid by the condenser (9); and
an evaporator (11) that evaporates the refrigerant expanded by the expansion valve,
the method comprising:
controlling the operations of the variable-speed centrifugal-compressor (7) and the constant-speed centrifugal-compressor (8) such that in the case where a required load factor of the centrifugal-chiller (3) is less than a predetermined value, the control unit selects a variable-speed-compressor priority operating mode in which only the variable-speed centrifugal-compressor (7), whose coefficient of performance (COP) in the region where the load factor is less than the predetermined value is higher than the coefficient of performance (COP) of the constant-speed centrifugal-compressor (8), is activated, and in the case where the required load factor of the centrifugal-chiller (3) is the predetermined value or greater, the control unit selects a combined-use operating mode in which the variable-speed centrifugal-compressor (7) and the constant-speed centrifugal-compressor (8) are activated.

## Patentansprüche

1. Ein Zentrifugalkühler (3) mit
einem Zentrifugalkompressor mit variabler Geschwindigkeit (7), der so konfiguriert ist, dass dessen Rotationsfrequenz durch einen Inverter bzw. Umrichter variiert werden kann und der angeordnet ist, um ein Kältemittel zu komprimieren,
einem Zentrifugalkompressor mit konstanter Geschwindigkeit (8), der parallel zu dem Zentrifugalkompressor mit variabler Geschwindigkeit (7) verbunden ist und der angeordnet ist, um mit einer konstanten Rotationsgeschwindigkeit betrieben zu werden, um das Kältemittel zu komprimieren,
einem Kondensor (9), der angeordnet ist, um das durch den Zentrifugalkompressor mit variabler Geschwindigkeit (7) und/oder den Zentrifugalkompressor mit konstanter Geschwindigkeit (8) komprimierte Kältemittel unter Verwendung von diesem zugeführten Kühlwasser in eine Flüssigkeit zu kondensieren,
einem Expansionsventil, das angeordnet ist, um das Kältemittel, das durch den Kondensor (9) in eine Flüssigkeit kondensiert wurde, zu expandieren,
einem Verdampfer (11), der angeordnet ist, um das durch das Expansionsventil expandierte Kältemittel zu verdampfen, und
einer Steuereinheit, die konfiguriert ist, um den Betrieb des Zentrifugalkompressors mit variabler Geschwindigkeit (7) und des Zentrifugalkompressors mit konstanter Geschwindigkeit (8) zu steuern,
wobei, in dem Fall, wo ein erforderlicher Lastfaktor des Zentrifugalkühlers (3) geringer ist als ein vorbestimmter Wert, die Steuereinheit einen Prioritätsbetriebsmodus für den Kompressor mit variabler Geschwindigkeit wählt, bei dem nur der Zentrifugalkompressor mit variabler Geschwindigkeit (7), dessen Leistungskoeffizient (COP) in dem Bereich, wo der Lastfaktor geringer ist als der vorbestimmte Wert, höher ist als der Leistungskoeffizient (COP) des Zentrifugalkompressors mit konstanter Geschwindigkeit (8), aktiviert ist, und in dem Fall, wo der erforderliche Lastfaktor des Zentrifugalkühlers (3) der vorbestimmte Wert oder größer ist, die Steuereinheit einen Betriebsmodus einer kombinierten Nutzung wählt, bei dem der Zentrifugalkompressor mit variabler Geschwindigkeit (7) und der Zentrifugalkompressor mit konstanter Geschwindigkeit (8) aktiviert werden.

2. Der Zentrifugalkühler (3) gemäß Anspruch 1, wobei der vorbestimmte Wert des Lastfaktors des Zentrifugalkühlers auf 30% oder höher und auf weniger als 50% eingestellt ist.

3. Der Zentrifugalkühler (3) gemäß Anspruch 1 oder 2, wobei
ein Einlassleitflügel (50), der angeordnet ist, um die Strömungsrate des zu einem Impeller oder Flügelrad des Zentrifugalkompressors mit konstanter Geschwindigkeit (8) strömenden Kältemittels zu steuern, stromauf des Impellers oder Flügelrads in dem Strom des Kältemittels vorgesehen ist, und
eine dem Einlassleitflügel (50) zugewandte Wand einen Dichtungsabschnitt besitzt, der eine Leckage des Kältemittels durch den Zwischenraum zwischen dem Einlassleitflügel (50) und der Wand minimiert, wenn der Einlassleitflügel (50) vollständig geschlossen ist.

4. Ein Verfahren zum Steuern eines Zentrifugalkühlers (3) mit
einem Zentrifugalkompressor mit variabler Geschwindigkeit (7), dessen Rotationsfrequenz durch einen Inverter variiert werden kann und der ein Kältemittel komprimiert,
einem Zentrifugalkompressor mit konstanter Geschwindigkeit (8), der parallel zu dem Zentrifugalkompressor mit variabler Geschwindigkeit (7) verbunden ist und der bei einer konstanten Rotationsgeschwindigkeit betrieben wird, um das Kältemittel zu komprimieren,
einem Kondensor (9), der das durch den
Zentrifugalkompressor mit variabler Geschwindigkeit (7) und/oder den Zentrifugalkompressor mit konstanter Geschwindigkeit (8) komprimierte Kältemittel unter Verwendung von diesem zugeführten Kühlwasser in eine Flüssigkeit kondensiert,
einem Expansionsventil, dass das Kältemittel, das durch den Kondensor (9) in eine Flüssigkeit kondensiert wurde, expandiert, und
einem Verdampfer (11), der das durch das Expansionsventil expandierte Kältemittel verdampft,
wobei das Verfahren aufweist:
Steuern des Betriebs des Zentrifugalkompressors mit variabler Geschwindigkeit (7) und des Zentrifugalkompressors mit konstanter Geschwindigkeit (8) so, dass in dem Fall, wo ein erforderlicher Lastfaktor des Zentrifugalkühlers (3) geringer ist als ein vorbestimmter Wert, die Steuereinheit einen Prioritätsbetriebsmodus für den Kompressor mit variabler Geschwindigkeit wählt, bei dem nur der Zentrifugalkompressor mit variabler Geschwindigkeit (7), dessen Leistungskoeffizient (COP) in dem Bereich, wo der Lastfaktor geringer ist als der vorbestimmte Wert, höher ist als der Leistungskoeffizient (COP) des Zentrifugalkompressors mit konstanter Geschwindigkeit (8), aktiviert ist, und in dem Fall, wo der erforderliche Lastfaktor des Zentrifugalkühlers (3) der vorbestimmte Wert oder größer ist, die Steuereinheit einen Betriebsmodus einer kombinierten Nutzung wählt, bei dem der Zentrifugalkompressor mit variabler Geschwindigkeit (7) und der Zentrifugalkompressor mit konstanter Geschwindigkeit (8) aktiviert werden.

## Revendications

1. Réfrigérateur (3) centrifuge comprenant :
un compresseur (7) centrifuge à vitesse variable, configuré de manière à pouvoir faire varier sa vitesse de rotation par un onduleur et qui est conçu pour comprimer un réfrigérant ;
un compresseur (8) centrifuge à vitesse constante, monté en parallèle au compresseur (7) centrifuge à vitesse variable et conçu pour fonctionner à une vitesse de rotation constante pour comprimer le réfrigérant ;
un condenseur (9), qui est conçu pour condenser le réfrigérant comprimé par le compresseur (7) centrifuge à vitesse variable et/ou par le compresseur (8) centrifuge à vitesse constante en un liquide, en utilisant de l'eau de refroidissement qui lui est fournie ;
un détendeur, qui est conçu pour détendre le réfrigérant qui est condensé en un liquide par le condenseur (9) ;
un évaporateur (11), qui est conçu pour évaporer le réfrigérant détendu par le détendeur et
une unité de commande, qui est configurée pour commander les fonctionnements du compresseur (7) centrifuge à vitesse variable et du compresseur (8) centrifuge à vitesse constante,
dans lequel, dans le cas où un facteur de charge requis du réfrigérateur (3) centrifuge est inférieur à une valeur déterminée à l'avance, l'unité de commande choisit un mode de fonctionnement prioritaire du compresseur à vitesse variable, dans lequel est activé seulement le compresseur (7) centrifuge à vitesse variable, dont le coefficient de performance (COP) dans la région où le facteur de charge est inférieur à la valeur déterminée à l'avance est plus grand que le coefficient de performance (COP) du compresseur (8) centrifuge à vitesse constante, et dans le cas où le facteur de charge requis du réfrigérateur (3) centrifuge est la valeur déterminée à l'avance ou lui est supérieur, l'unité de commande choisit un mode de fonctionnement d'utilisation combinée, dans lequel le compresseur (7) centrifuge à vitesse variable et le compresseur (8) centrifuge à vitesse constante sont activés.

2. Réfrigérateur (3) centrifuge suivant la revendication 1, dans lequel
la valeur déterminée à l'avance du facteur de charge du réfrigérateur centrifuge est supérieure ou égale à 30% et inférieure à 50%.

3. Réfrigérateur (3) centrifuge suivant la revendication 1 ou 2, dans lequel
une aube (50) directrice d'entrée, qui est conçue pour commander le débit du réfrigérant allant à un impulseur du compresseur (8) centrifuge à vitesse constante, est prévue en amont de l'impulseur dans le courant du réfrigérant et
une paroi faisant face à l'aube (50) directrice d'entrée a une partie d'étanchéité, qui minimise la fuite du réfrigérant dans l'intervalle entre l'aube (50) directrice d'entrée et la paroi, lorsque l'aube (50) directrice d'entrée est fermée complètement.

4. Procédé de commande d'un réfrigérateur (3) centrifuge comprenant
un compresseur (7) centrifuge à vitesse variable, dont la fréquence de rotation peut être modifiée par un onduleur et qui comprime un réfrigérant ;
un compresseur (8) centrifuge à vitesse constante, monté en parallèle au compresseur (7) centrifuge à vitesse variable et fonctionnant à une vitesse de rotation constante pour comprimer le réfrigérant ;
un condenseur (9), qui condense le réfrigérant comprimé par le compresseur (7) centrifuge à vitesse variable et/ou par le compresseur (8) centrifuge à vitesse constante en un liquide, en utilisant de l'eau de refroidissement qui lui est envoyée ;
un détendeur, qui détend le réfrigérant qui est condensé en un liquide par le condenseur (9) ;
un évaporateur (11), qui évapore le réfrigérant détendu par le détendeur,
le procédé comprenant
commander les fonctionnements du compresseur (7) centrifuge à vitesse variable et du compresseur (8) centrifuge à vitesse constante, de manière à ce que, dans le cas où un dans le cas où un facteur de charge requis du réfrigérateur (3) centrifuge est inférieur à une valeur déterminée à l'avance, l'unité de commande choisit un mode de fonctionnement prioritaire du compresseur à vitesse variable, dans lequel est activé seulement le compresseur (7) centrifuge à vitesse variable, dont le coefficient de performance (COP) dans la région où le facteur de charge est inférieur à la valeur déterminée à l'avance est plus grand que le coefficient de performance (COP) du compresseur (8) centrifuge à vitesse constante, et dans le cas où le facteur de charge requis du réfrigérateur (3) centrifuge est la valeur déterminée à l'avance ou lui est supérieur, l'unité de commande choisit un mode de fonctionnement d'utilisation combinée, dans lequel le compresseur (7) centrifuge à vitesse variable et le compresseur (8) centrifuge à vitesse constante sont activés.
